Europäisches Patentamt

European Patent Office

Office européen des brevets

(19)

(11) Veröffentlichungsnummer : **0 205 920 B1**

(12) **EUROPÄISCHE PATENTSCHRIFT**

(45) Veröffentlichungstag der Patentschrift :
17.05.89

(21) Anmeldenummer : 86106828.6

(22) Anmeldetag : 20.05.86

(51) Int. Cl.⁴ : **G 21 C 3/62**

(54) Verfahren zum Herstellen von oxidischen Kernbrennstoffsinterkörpern.

(30) Priorität : 03.06.85 DE 3519825

(43) Veröffentlichungstag der Anmeldung :
30.12.86 Patentblatt 86/52

(45) Bekanntmachung des Hinweises auf die Patenter-
teilung : 17.05.89 Patentblatt 89/20

(84) Benannte Vertragsstaaten :
**BE DE FR GB IT SE**

(56) Entgegenhaltungen :
**EP-A- 0 078 428
US-A- 4 052 330**

(73) Patentinhaber : **Siemens Aktiengesellschaft Berlin
und München
Wittelsbacherplatz 2
D-8000 München 2 (DE)**

**REAKTOR-BRENNELEMENT UNION GmbH
Rodenbacher Chaussee 6
D-6450 Hanau 11 (DE)**

(72) Erfinder : **Peehs, Martin, Dr. Dipl.-Phys.
Falkenstrasse 3
D-8526 Bubenreuth (DE)**
Erfinder : **Bayer, Heinrich
Schäfereiwiesenweg 7
D-8756 Kahl (DE)**
Erfinder : **Jenczio, Ulrich
August-Bebel-Strasse 26
D-6450 Hanau 11 (DE)**
Erfinder : **Laucht, Jürgen, Dipl.-Ing.
Hermann-Löns-Strasse 1
D-6450 Hanau 8 (DE)**
Erfinder : **Hellmann, Sieghard, Dr. Dipl.-Chem.
Häuslinger-Strasse 32
D-8520 Erlangen (DE)**
Erfinder : **Dichtjar, Gerhard
Rothenberger Strasse 17
D-6456 Langenselbold (DE)**
Erfinder : **Dörr, Wolfgang, Dr. Dipl.-Phys.
v.-Weber-Strasse 51a
D-8522 H'aurach (DE)**
Erfinder : **Maier, Georg
Am Gründla 31
D-8522 H'aurach (DE)**

(74) Vertreter : **Mehl, Ernst, Dipl.-Ing. et al
Postfach 22 13 17
D-8000 München 22 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft ein Verfahren nach dem Oberbegriff des Patentanspruchs 1. Das Ausgangspulver kann die Zusammensetzung $UO_{2-x}$, $PuO_{2-x}$ bzw. $(U,Pu)O_{2-x}$ haben.

Ein derartiges Verfahren ist aus der europäischen Patentanmeldung 0 078 428 bekannt. Aufgrund der in den Preßlingen in kristallographisch nachweisbarem Umfang ausgebildeten $U_4O_9$- bzw. $(U,Pu)_4O_9$-Kristallphase weisen die nach dem bekannten Verfahren gewonnenen oxidischen Kernbrennstoffsinterkörper eine Mikrostruktur mit gleichmäßig verteiltem grobem Korn auf, welche stabil gegen Wachstum bei Betriebstemperatur in einem Kernreaktor ist. Da keine Korngrenzenwanderung mehr auftritt, können gasförmige oder leicht flüchtige Kernspaltprodukte wie Xenon oder Jod nicht durch wandernde Korngrenzen aus der Kernbrennstoffoxidmatrix nach außen geschwemmt werden und einen unerwünschten Überdruck im Hüllrohr eines Brennstabes aufbauen, in dem sich die oxidischen Kernbrennstoffsinterkörper im Kernreaktor befinden. Ferner brauchen die Preßlinge keine kornwachstumsfördernd wirkenden Sinterzusätze zu enthalten, die die Dichte der Kernbrennstoffsinterkörper beeinflussen können.

Die $U_4O_9$- bzw. $(U,Pu)_4O_9$-Kristallphase wird beim bekannten Verfahren in den Preßlingen während des Aufheizens auf die Sintertemperatur in oxidierend wirkender Gasatmosphäre ausgebildet. Um diese $U_4O_9$- bzw. $(U,Pu)_4O_9$-Kristallphase in ausreichendem Maße auszubilden, sind beim bekannten Verfahren in der Regel Haltezeiten erforderlich, in denen die Preßlinge beim Erwärmen auf die Sintertemperatur in der oxidierend wirkenden Gasatmosphäre auf einer Temperatur im Bereich von 400 °C bis 600 °C gehalten werden. Die Länge dieser Haltezeiten ist abhängig vom Sauerstoff zu Uran- d. h. O/U-Verhältnis des Uranoxid-Ausgangspulvers. Ein Uranoxid-Ausgangspulver mit einem typischen O/U-Verhältnis von 2,10 erfordert beispielsweise eine Haltezeit von mindestens 1,5 Stunden bei einer Temperatur im Bereich von 400 °C bis 600 C, wenn die Preßlinge ganz in die $U_4O_9$- bzw. $(U,Pu)_4O_9$-Kristallphase überführt werden sollen.

Ferner ist die Konzentration des gleichmäßig verteilten groben Korns in der Mikrostruktur der nach dem bekannten Verfahren gewonnenen oxidischen Kernbrennstoffsinterkörper abhängig vom Sauerstoffpotential, das die oxidierend wirkende Gasatmosphäre während des Aufheizens auf die Sintertemperatur und während des Sinterns hat.

Das Sauerstoffpotential ist durch die Beziehung $\Delta G_{O_2} = RT \cdot \ln p_{O_2}$ mit R = allgemeine Gaskonstante, T = absolute Temperatur und $p_{O_2}$ = Sauerstoffpartialdruck in der oxidierend wirkenden Gasatmosphäre definiert.

Der Erfindung liegt die Aufgabe zugrunde, das bekannte Verfahren weiterzubilden und die Einstellung der Konzentration des gleichmäßig verteilten groben Korns in der Mikrostruktur der Kernbrennstoffsinterkörper zu erleichtern.

Zur Lösung dieser Aufgabe hat ein Verfahren der eingangs erwähnten Art erfindungsgemäß die Verfahrensschritte nach dem kennzeichnenden Teil des Patentanspruches 1.

Die Wärmebehandlung des Ausgangspulvers oder der Preßlinge beim Vorrösten ist unabhängig von der Wärmebehandlung beim späteren Sintern der Preßlinge, so daß durch das Vorrösten die Konzentration der $U_4O_9$- bzw. $(U,Pu)_4O_9$-Kristallphase im Ausgangspulver oder in den Preßlingen sehr genau auf einen gewünschten Wert eingestellt werden kann. Deshalb kann auch die Konzentration des groben Korns in der Mikrostruktur der durch das Sintern gewonnenen oxidischen Kernbrennstoffsinterkörper entsprechend genau eingestellt werden. Dies gestattet, über die Einstellung der bimodalen Korngrößenverteilung in den oxidischen Kernbrennstoffsinterkörpern auch deren Plastizität gezielt zu beeinflussen. Diese Plastizität ist von Bedeutung für die mechanische Wechselwirkung mit dem Hüllrohr des Brennstabes, in dem sich die oxidischen Kernbrennstoffsinterkörper im Kernreaktor befinden. Besondere Haltezeiten sind beim Aufheizen der Preßlinge von der Ausgangstemperatur auf die Sintertemperatur nicht erforderlich.

Die Unteransprüche sind auf vorteilhafte Ausgestaltungen des Verfahrens nach dem Patentanspruch 1 gerichtet, durch die die Flexibilität und die Wirtschaftlichkeit des Verfahrens verbessert werden.

Als oxidierend wirkende Gasatmosphäre, in der die Wärmebehandlung der Preßlinge bei der Sintertemperatur im Bereich von 1 000 °C bis 1 400 °C erfolgt, kann Kohlendioxid oder ein Gemisch von Kohlendioxid und Sauerstoff oder Luft verwendet werden. Der Druck dieser oxidierend wirkenden Gasatmosphäre ist in der Regel Atmosphärendruck. Als reduzierend wirkende Gasatmosphäre für die anschließende Wärmebehandlung im Temperaturbereich von 1 000 °C bis 1 400 °C kann Wasserstoff oder ein Gemisch aus Wasserstoff und einem Inertgas, z. B. Stickstoff oder Edelgas, ebenfalls mit Atmosphärendruck verwendet werden. Während die Behandlungszeiten (Sinterzeit) der Preßlinge bei der Sintertemperatur im Bereich von 1 000 °C bis 1 400 °C in oxidierend wirkender Gasatmosphäre in der Regel im Bereich von 15 Min. bis 2 Stunden liegen, werden bei der nachfolgenden Wärmebehandlung in reduzierend wirkender Gasatmosphäre in der Regel Behandlungszeiten (Reduktionszeit) im Bereich von 15 Min. bis 1 Stunde gewählt.

Die Konzentration einer im Ausgangspulver bzw. in den Preßlingen durch das Vorrösten erzielten $U_4O_9$- bzw. $(U,Pu)_4O_9$-Kristallphase und auch einer $U_3O_8$- bzw. $(U,Pu)_3O_8$-Kristallphase kann günstigerweise durch Bestimmen der Gitterkonstante in den behandelten Preßlingen mit Hilfe von Röntgendiffraktometrie (vergl. « Solid State Communications », vol. 5, pp. 349-352, 1967) oder von Neutronendiffraktometrie (vergl. « Le Journal de Physique », tome 25, pp. 431-439, 1964) festgestellt werden.

EP 0 205 920 B1

Die Erfindung und ihre Vorteile seien anhand der folgenden Ausführungsbeispiele näher erläutert :
Für alle Ausführungsbeispiele wurde Ausgangspulver aus $UO_2$ verwendet, das nach dem sogenannten AUC-Prozeß gewonnen wurde. Der AUC-Prozeß ist im « Gmelin-Handbuch der Anorganischen Chemie », Uran, Ergänzungsband A3, 1981, auf den Seiten 101 bis 104 beschrieben. Dieses Ausgangspulver hatte für die Ausführungsbeispiele 1 bis 8 ein Sauerstoff zu Uran- d. h. O/U-Verhältnis von 2,10 und für das Ausführungsbeispiel 9 ein O/U-Verhältnis von 2.0.

Für die Ausführungsbeispiele 1 und 2 wurde das Ausgangspulver in einem besonderen Röstofen in Röstgasatmosphäre von Atmosphärendruck vorgeröstet, nach dem Vorrösten in der Abkühlgasatmosphäre bei Atmosphärendruck auf Umgebungstemperatur von 20 °C als Ausgangstemperatur abgekühlt und dann zu Preßlingen kompaktiert. Diese Preßlinge wurden in einem Sinterofen in einer Aufheizgasatmosphäre mit 1 bar Druck auf die Sintertemperatur erhitzt, während einer Sinterzeit in oxidierend wirkender Gasatmosphäre gesintert und anschließend im gleichen Ofen während einer Reduktionszeit in einer reduzierend wirkenden Gasatmosphäre reduziert und schließlich wieder auf die Umgebungstemperatur abgekühlt. In Tabelle I sind die Verfahrensbedingungen für die Ausführungsbeispiele 1 und 2, die Konzentrationen der durch das Vorrösten erzielten Kristallphasen und die Konzentrationen des groben und des feinen Korns in den gewonnenen oxidischen Kernbrennstoffsinterkörpern angegeben.

Tabelle I

| | Ausführungs-beispiel 1 | Ausführungs-beispiel 2 |
|---|---|---|
| Rösttemperatur | 140°C | 160°C |
| Röstzeit | 20 Minuten | 1 Stunde |
| Röstgasatmosphäre | Luft | Luft |
| Abkühlgasatmosphäre | Luft | Luft |
| Konzentration der $U_4O_9$-Kristallphase im vorgerösteten Ausgangspulver | 20 Gew. % | 100 Gew. % |
| Aufheizgasatmosphäre | $CO_2$ | $N_2$ |
| Oxidierend wirkende Gasatmosphäre beim Sintern | $CO_2$ | $CO_2$ |
| Sintertemperatur | 1100°C | 1100°C |
| Sinterzeit | 1 Stunde | 1 Stunde |
| Reduzierend wirkende Gasatmosphäre | $H_2$ | $H_2$ |
| Reduktionstemperatur | 1100°C | 1100°C |
| Reduktionszeit | 15 Minuten | 1 Stunde |
| Konzentration des groben Korns (25 μm) in den oxidischen Kernbrennstoff-sinterkörpern | 40 % | 100 % |
| Konzentration des feinen Korns (3-5 μm) in den oxidischen Kernbrennstoff-sinterkörpern | 60 % | 0% |

3

Für die Ausführungsbeispiele 3 und 4 wurde Ausgangspulver mit Pulver gemischt, das aus Ausgangspulver durch Vorrösten wie bei den Ausführungsbeispielen 1 und 2 gewonnen wurde und U₂O₉-Kristallphase enthielt. Die Pulvermischung wurde zu Preßlingen kompaktiert, die wie die Preßlinge bei den Ausführungsbeispielen 1 und 2 zu oxidischen Kernbrennstoffsinterkörpern verarbeitet wurden. In der Tabelle II sind die Konzentrationen der U₄O₉-Kristallphase in den Mischungskomponenten und die Anteile der Mischungskomponenten sowie die Konzentrationen des groben und des feinen Korns in den gewonnenen oxidischen Kernbrennstoffsinterkörpern angegeben.

Tabelle II

| | Ausführungs-beispiel 3 | Ausführungs-beispiel 4 |
|---|---|---|
| Anteil der $U_4O_9$-Kristall-phase im Pulver 1 (vorge-röstetes Ausgangspulver | 100 % | 80 % |
| Anteil der $U_4O_9$-Kristall-phase im Pulver 2 (nicht vorgeröstetes Ausgangs-pulver) | 0 % | 0 % |
| Anteil des Pulvers 1 in der Pulvermischung | 50 % | 70 % |
| Anteil des Pulvers 2 in der Pulvermischung | 50 % | 30 % |
| Konzentration des groben Korns (25 μm) in den oxi-dischen Kernbrennstoff-sinterkörpern | 60 % | 70 % |
| Konzentration des feinen Korns (3-5 μm) in den oxidischen Kernbrenn-stoffsinterkörpern | 40 % | 30 % |

Für die Ausführungsbeispiele 5 und 6 wurde Ausgangspulver zu Preßlingen gepreßt, die in einem Röstofen in einer Röstgasatmosphäre von Atmosphärendruck vorgeröstet und anschließend in einer Abkühlgasatmosphäre von Atmosphärendruck auf Umgebungstemperatur von 20 °C als Ausgangstemperatur abgekühlt wurden. Anschließend wurden diese Preßlinge in einem Sinterofen wie die Preßlinge der Ausführungsbeispiele 1 und 2 weiterbehandelt. In Tabelle III sind für die Ausführungsbeispiele 5 und 6 das O/U-Verhältnis in den Preßlingen, die Verfahrensbedingungen für das Vorrösten dieser Preßlinge, die durch dieses Vorrösten erzielte Konzentration der U₄O₉-Kristallphase in den Preßlingen und die Konzentration des groben und des feinen Korns in den gewonnenen oxidischen Kernbrennstoffsinterkör-pern angegeben.

4

Tabelle III

|  | Ausführungs-<br>beispiel 5 | Ausführungs-<br>beispiel 6 |
| --- | --- | --- |
| Ausgangswert O/U in den Preßlingen | 2,12 | 2,12 |
| Rösttemperatur | 150°C | 180°C |
| Röstzeit | 30 Minuten | 1 Stunde und 10 Minuten |
| Röstgasatmosphäre | Luft | Luft |
| Abkühlgasatmosphäre | Luft | Luft |
| Konzentration der $U_4O_9$-Kristallphase in den vorgerösteten Preßlingen | 20 % | 100 % |
| Konzentration des groben Korns (25 $\mu$m) in den oxidischen Kernbrennstoffsinterkörpern | 40 % | 100 % |
| Konzentration des feinen Korns (3-5 $\mu$m) in den oxidischen Kernbrennstoffsinterkörpern | 60 % | 0 % |

Wie aus den Tabellen I bis III erkennbar ist, können Konzentrationen des groben und des feinen Korns in den oxidischen Kernbrennstoffsinterkörpern in weiten Bereichen auf gewünschte Werte eingestellt werden.

Für das Ausführungsbeispiel 7 wurde Ausgangspulver in einem besonderen Röstofen in einer Röstgasatmosphäre von Atmosphärendruck vorgeröstet bei einer Rösttemperatur und mit einer Röstzeit, bei denen neben der $U_4O_9$-Kristallphase auch eine $U_3O_8$-Kristallphase entstand. Das Pulver wurde dann wie bei den Ausführungsbeispielen 1 und 2 abgekühlt und zu Preßlingen kompaktiert, aus denen ebenfalls wie bei den Ausführungsbeispielen 1 und 2 oxidische Kernbrennstoffsinterkörper gewonnen wurden.

Beim Ausführungsbeispiel 8 wurden aus dem Ausgangspulver durch Kompaktieren gewonnene Preßlinge mit einem O/U-Verhältnis von 2,12 in einem besonderen Röstofen in einer Röstgasatmosphäre mit Atmosphärendruck unter Bildung einer $U_3O_8$-Kristallphase neben der $U_4O_9$-Kristallphase vorgeröstet und anschließend wie die Preßlinge bei den Ausführungsbeispielen 5 und 6 zu oxidischen Kernbrennstoffsinterkörpern weiterverarbeitet.

In Tabelle IV sind die Verfahrensbedingungen für das Vorrösten des Ausgangspulvers bzw. der Preßlinge, die durch dieses Vorrösten erzielte Konzentration der $U_4O_9$-Kristallphase und der $U_3O_8$-Kristallphase im Pulver bzw. in den Preßlingen und die Konzentration des groben und des feinen Korns in den gewonnenen oxidischen Kernbrennstoffsinterkörpern angegeben.

(Siehe Tabelle IV Seite 6 f.)

Tabelle IV

| | Ausführungs-<br>beispiel 7 | Ausführungs-<br>beispiel 8 |
|---|---|---|
| Rösttemperatur | 150°C | 150°C |
| Röstzeit | 2 Stunden | 2 Stunden |
| Röstgasatmosphäre | Luft | Luft |
| Konzentrationen der | | |
| $U_4O_9$-Kristallphase | 85 % im Pulver | 83 % in den Preßlingen |
| $U_3O_8$-Kristallphase | 15 % | 17 % |
| Konzentration des groben Korns (25 $\mu$m) in den oxidischen Kernbrennstoff-sinterkörpern | 85 % | 85 % |
| Konzentration des feinen Korns (3-5 $\mu$m) in den oxidischen Kernbrennstoff-sinterkörpern | 15 % | 15 % |

Die nach den Ausführungsbeispielen 7 und 8 gewonnenen oxidischen Kernbrennstoffsinterkörper haben eine Dichte von 10.26 g/cm³ und eine sogenannte offene Porosität von 0,85 % ihres Volumens. Die offene Porosität ist der Anteil der Poren im Sinterkörper, die die Oberfläche dieses Sinterkörpers erreichen. In diese Poren können daher einerseits leicht Umgebungsgase eindringen, andererseits aber auch gasförmige Kernspaltprodukte leicht aus dem Sinterkörper heraus nach außen gelangen.

Die nach dem Ausführungsbeispiel 2 gewonnenen Sinterkörper haben eine Dichte von 10.48 g/cm³ und eine offene Porosität von 1,05 % ihres Volumens. Verglichen mit diesen Sinterkörpern haben die nach den Ausführungsbeispielen 7 und 8 gewonnenen Sinterkörper eine verhältnismäßig niedrige Dichte und eine verhältnismäßig niedrige offene Porosität, was auf die $U_3O_8$-Kristallphase in den Preßlingen zurückzuführen ist, aus dem die Sinterkörper nach den Ausführungsbeispielen 7 und 8 hergestellt werden. Aufgrund dieser relativ niedrigen offenen Porosität haben diese Sinterkörper eine geringere Aufnahmefähigkeit für Feuchtigkeit aus der Umgebungsatmosphäre als die nach dem Ausführungsbeispiel 2 gewonnenen Sinterkörper. Außerdem ist ihre Freisetzungsrate für gasförmige Kernspaltprodukte in einem Kernreaktor geringer als die der Sinterkörper, die nach dem Ausführungsbeispiel 2 gewonnen wurden. Nach den Ausführungsbeispielen 7 und 8 gewonnene Kernbrennstoffsinterkörper können daher vor ihrem Einfüllen in das Hüllrohr eines Brennstabes leichter getrocknet werden. Außerdem können sie länger in einem Kernreaktor eingesetzt werden, ohne daß sich ein unzulässig hoher Überdruck im Brennstab infolge freigesetzter gasförmiger Kernspaltprodukte aufbaut.

Für das Ausführungsbeispiel 9 wurde das durch den AUC-Prozeß gewonnene Ausgangspulver nicht reoxidiert, sondern mit einer Pulvertemperatur von 650 °C unmittelbar aus einem Wirbelbettofen in ein Reaktionsgefäß abgelassen, in dem das Ausgangspulver mit Stickstoff von Raumtemperatur d. h. 25 °C zur Abkühlung bis auf eine obere Grenztemperatur aufgewirbelt wurde. Dieses Reaktionsgefäß hatte eine Doppelwand, in die ein Kühlmittel, z. B. Wasser, eingefüllt werden konnte. Nachdem das Ausgangspulver die obere Grenztemperatur erreicht hatte, wurde in das Reaktionsgefäß eine Röstgasatmosphäre mit einem Druck von 1,3 bar und einer Temperatur von 25 °C eingeleitet und das Ausgangspulver aufgewirbelt und vorgeröstet. Das Ausgangspulver kühlte von der oberen Grenztemperatur mit einem bestimmten Anfangswert und einem bestimmten Endwert für die Abkühlgeschwindigkeit bis auf eine untere Grenztemperatur ab.

Nach Erreichen dieser unteren Grenztemperatur wurde die Röstgasatmosphäre im Reaktionsgefäß wieder durch Stickstoff mit einem Druck von 1,3 bar als Abkühlgasatmosphäre ersetzt und das Ausgangspulver durch fortlaufendes Wechseln des Wassers in der Doppelwand des Reaktionsgefäßes vollends auf die Ausgangstemperatur d. h. die Umgebungstemperatur von 25 °C abgekühlt.

Das auf die Ausgangstemperatur abgekühlte, vorgeröstete Ausgangspulver wurde sodann weiterbehandelt wie das vorgeröstete und das abgekühlte Pulver bei den Ausführungsbeispielen 1 und 2. In Tabelle V sind die Verfahrensbedingungen für das Vorrösten im Reaktionsgefäß, die durch dieses Vorrösten gewonnene Konzentration der $U_4O_9$-Kristallphase sowie die Konzentration des groben und des feinen Korns in den gewonnenen oxidischen Kernbrennstoffsinterkörpern angeben.

Tabelle V

## Ausführungsbeispiel 9

| | |
|---|---|
| Obere Grenztemperatur für das Vorrösten des Ausgangspulvers | $250°C$ |
| Untere Grenztemperatur für das Vorrösten des Ausgangspulvers | $130°C$ |
| Abkühlgeschwindigkeit beim Vorrösten des Ausgangspulvers | Anfangswert $15°C$/Minute Endwert $0,1°C$/Minute |
| Röstgasatmosphäre | Luft |
| Konzentration der $U_4O_9$-Kristallphase im vorgerösteten Pulver | 100 % |
| Konzentration des groben Korns (25 $\mu$m) in den oxidischen Kernbrennstoffsinterkörpern | 100 % |
| Konzentration des feinen Korns (3-5 $\mu$m) in den oxidischen Kernbrennstoffsinterkörpern | 0 % |

Entsprechend dem Ausführungsbeispiel 9 kann man also das Vorrösten des Ausgangspulvers unmittelbar an seine Herstellung anschließen d. h. man kann dieses Vorrösten mit dem Herstellungsverfahren des Ausgangspulvers koppeln und dadurch ein gesondertes Aufheizen zu Vorröstzwecken einsparen.

**Patentansprüche**

1. Verfahren zum Herstellen von oxidischen Kernbrennstoffsinterkörpern durch Pressen von Uranoxid-Ausgangspulver, von einer Mischung aus Uranoxid- und Plutoniumoxid-Ausgangspulver oder von Uran-Plutonium-Oxid-Mischkristall-Ausgangspulver zu Preßlingen und durch eine Wärmebehandlung dieser Preßlinge mit in ihnen in kristallographisch nachweisbarem Umfang ausgebildeter $U_4O_9$- bzw. $(U,Pu)_4O_9$-Kristallphase bei einer Sintertemperatur im Bereich von 1 000 °C bis 1 400 °C in oxidierend und anschließend in reduzierend wirkender Gasatmosphäre, dadurch gekennzeichnet, daß das Ausgangspulver und/oder die Preßlinge bei einer Rösttemperatur unterhalb der Sintertemperatur in einer oxidierend wirkenden Röstgasatmosphäre mit einem Sauerstoffpotential, bei dem die $U_4O_9$- bzw. $(U,Pu)_4O_9$-Kristallphase ausgebildet wird, vorgeröstet und anschließend auf eine Ausgangstemperatur unterhalb der Rösttemperatur in einer inerten oder oxidierend wirkenden Abkühlgasatmosphäre unter Erhaltung der $U_4O_9$- bzw. $(U,Pu)_4O_9$-Kristallphase abgekühlt werden und daß die Preßlinge ausgehend von dieser Ausgangstemperatur in einer inerten oder oxidierend wirkenden Aufheizgasatmosphäre unter Erhaltung der $U_4O_9$- bzw. der $(U,Pu)_4O_9$-Kristallphase auf die Sintertemperatur aufgeheizt werden.

2. Verfahren nach Anspruch 1, dadurch gekennzeichnet, daß das Ausgangspulver so vorgeröstet wird, daß mindestens 20 Gew.% $U_4O_9$- bzw. $(U,Pu)_4O_9$-Kristallphase ausgebildet werden.

3. Verfahren nach Anspruch 2, dadurch gekennzeichnet, daß das Ausgangspulver so vorgeröstet wird, daß es vollständig in die $U_4O_9$- bzw. $(U,Pu)_4O_9$-Kristallphase umgewandelt wird.

4. Verfahren nach Anspruch 2, dadurch gekennzeichnet, daß das vorgeröstete Ausgangspulver nach

7

dem Abkühlen auf die Ausgangstemperatur mit einer solchen Menge Uranoxid-, Plutoniumoxid- und/oder Uran-Plutonium-Oxid-Mischkristallausgangspulver zu einer Pulvermischung vermischt wird mit einem Gehalt an $U_2O_3$- bzw. $(U,Pu)_2O_3$-Kristallphase von mindestens 20 Gew.%.

5. Verfahren nach Anspruch 1, dadurch gekennzeichnet, daß die Preßlinge aus Uranoxid-, Plutoniumoxid- und/oder Uran-Plutonium-Oxid-Mischkristallausgangspulver gepreßt und anschließend so vorgeröstet werden, daß mindestens 20 Gew.% $U_4O_9$- bzw. $(U,Pu)_4O_9$-Kristallphase ausgebildet werden.

6. Verfahren nach Anspruch 5, dadurch gekennzeichnet, daß die Preßlinge so vorgeröstet werden, daß sie vollständig in die $U_4O_9$- bzw. $(U,Pu)_4O_9$-Kristallphase umgewandelt werden.

7. Verfahren nach Anspruch 1, dadurch gekennzeichnet, daß das Ausgangspulver und/oder die Preßlinge in der oxidierend wirkenden Röstgasatmosphäre mit einem Sauerstoffpotential vorgeröstet werden, bei dem sich neben der $U_4O_9$- bzw. der $(U,Pu)_4O_9$-Kristallphase eine $U_3O_8$- bzw. $(U,Pu)_3O_8$-Kristallphase in kristallographisch nachweisbarem Umfang ausbildet.

8. Verfahren nach Anspruch 1, dadurch gekennzeichnet, daß als Röstgasatmosphäre ein Gemisch von Kohlendioxid oder Stickstoff mit Sauerstoff, vorzugsweise Luft, mit Atmosphärendruck verwendet wird.

9. Verfahren nach Anspruch 1, dadurch gekennzeichnet, daß als Ausgangstemperatur eine Temperatur im Bereich von 20 °C bis 30 °C, insbesondere Umgebungstemperatur, gewählt wird.

10. Verfahren nach einem der Ansprüche 2 bis 7, dadurch gekennzeichnet, daß die Rösttemperatur im Bereich von 70 °C bis 400 °C und die Vorröstzeit im Bereich von 10 Minuten bis 6 Stunden gewählt werden.

11. Verfahren nach Anspruch 10, dadurch gekennzeichnet, daß die Rösttemperatur im Bereich von 70 °C bis 200 °C und die Vorröstzeit im Bereich von 10 Minuten bis 2 Stunden gewählt werden.

12. Verfahren nach Anspruch 10, dadurch gekennzeichnet, daß die Rösttemperatur im Bereich von 200 °C bis 400 °C und die Vorröstzeit im Bereich von 10 Minuten bis 30 Minuten gewählt wird.

13. Verfahren nach Anspruch 1, dadurch gekennzeichnet, daß das Ausgangspulver als Uranoxid und/oder Uran-Plutonium-Oxid-Mischkristall mit einer Pulvertemperatur oberhalb der Rösttemperatur erzeugt und zunächst in einer inerten Gasatmosphäre abgekühlt wird, daß das Ausgangspulver dann ab Erreichen einer oberen Grenztemperatur bis zum Erreichen einer unteren Grenztemperatur in der oxidierend wirkenden Röstgasatmosphäre vorgeröstet und schließlich in der Abkühlgasatmosphäre auf die Ausgangstemperatur abgekühlt wird.

14. Verfahren nach Anspruch 13, dadurch gekennzeichnet, daß die obere Grenztemperatur im Bereich von 170 °C bis 280 °C und die untere Grenztemperatur im Bereich von 120 °C bis 150 °C gewählt werden.

15. Verfahren nach Anspruch 14, dadurch gekennzeichnet, daß als obere Grenztemperatur 250 °C und als untere Grenztemperatur 130 °C gewählt werden.

16. Verfahren nach Anspruch 13, dadurch gekennzeichnet, daß das Ausgangspulver beim Vorrösten zwischen der oberen und der unteren Grenztemperatur mit einer Anfangsgeschwindigkeit im Bereich von 10 °C/Minute bis 20 °C/Minute und mit einer Endgeschwindigkeit von 0,1 °C/Minute abgekühlt wird.

17. Verfahren nach Anspruch 13, dadurch gekennzeichnet, daß das Ausgangspulver beim Vorrösten in einem Reaktionsgefäß in der Röstgasatmosphäre aufgewirbelt und durch Wärmeübergang an ein Kühlmittel, vorzugsweise an Wasser in einer Doppelwand des Reaktionsgefäßes, von der oberen auf die untere Grenztemperatur abgekühlt wird.

18. Verfahren nach Anspruch 17, dadurch gekennzeichnet, daß das Kühlmittel mit einer Ausgangstemperatur im Bereich von 20 °C bis 30 °C, vorzugsweise mit Umgebungstemperatur, in die Doppelwand des Reaktionsgefäßes eingefüllt wird.

19. Verfahren nach Anspruch 1, dadurch gekennzeichnet, daß als Abkühlgasatmosphäre Stickstoff, ein Edelgas oder ein Gemisch von Kohlendioxid oder von Stickstoff mit Sauerstoff, vorzugsweise Luft, mit Atmosphärendruck verwendet wird.

20. Verfahren nach Anspruch 1, dadurch gekennzeichnet, daß als Aufheizgasatmosphäre ein Edelgas, Stickstoff und/oder Kohlendioxid mit einem Druck im Bereich von 1 bis 1,5 bar verwendet wird.


**Claims**

1. Method for producing oxidic nuclear fuel sintered bodies by pressing uranium oxide initial powder, a mixture of uranium oxide and plutonium oxide initial powder or uranium-plutonium oxide mixed-crystal initial powder to form pressed pieces and through heat treatment of these pressed pieces having $U_4O_9$- or $(U,Pu)_4O_9$-crystal phase which is formed in them on a scale which may be detected crystallographically, at a sintering temperature in the range of 1 000 °C to 1 400 °C in oxidizing and subsequently reducing gaseous atmosphere, characterised in that the initial powder and/or the pressed pieces are preroasted at a roasting temperature below the sintering temperature in an oxidizing roasting gaseous atmosphere having an oxygen potential, upon which the $U_4O_9$- or $(U,Pu)_4O_9$-crystal phase is formed, and are subsequently cooled down to an initial temperature below the roasting temperature in an inert or oxidizing cooling gaseous atmosphere whilst maintaining the $U_4O_9$- or $(U,Pu)_4O_9$-crystal phase and in that the pressed pieces are heated up to the sintering temperature, starting from said initial temperature in an inert or oxidizing heating gaseous atmosphere whilst maintaining the $U_4O_9$- or the $(U,Pu)_4O_9$-crystal phase.

2. Method according to claim 1, characterised in that the initial powder is preroasted in such a way that at least 20 % by weight $U_4O_9$- or $(U,Pu)_4O_9$-crystal phase is formed.

3. Method according to claim 2, characterised in that the initial powder is preroasted in such a way that it is completely converted into the $U_4O_9$- or $(U,Pu)_4O_9$-crystal phase.

4. Method according to claim 2, characterised in that the preroasted initial powder is mixed, after cooling to the initial temperature, with such a quantity of uranium oxide, plutonium oxide and/or uranium-plutonium oxide mixed-crystal initial powder to form a powder mixture having a content of $U_4O_9$- or $(U,Pu)_4O_9$-crystal phase of at least 20 % by weight.

5. Method according to claim 1, characterised in that the pressed pieces are pressed from uranium oxide, plutonium oxide and/or uranium-plutonium oxide mixed-crystal initial powder and subsequently are preroasted in such a way that at least 20 % by weight $U_4O_9$- or $(U,Pu)_4O_9$-crystal phase is formed.

6. Method according to claim 5, characterised in that the pressed pieces are preroasted in such a way that they are completely converted into the $U_4O_9$- or $(U,Pu)_4O_9$-crystal phase.

7. Method according to claim 1, characterised in that the initial powder and/or the pressed pieces are preroasted in the oxidizing roasting gaseous atmosphere having an oxygen potential upon which, in addition to the $U_4O_9$- or $(U,Pu)_4O_9$-crystal phase, a $U_3O_8$- or $(U,Pu)_3O_8$-crystal phase forms on a scale which may be detected crystallographically.

8. Method according to claim 1, characterised in that a mixture of carbon dioxide or nitrogen with oxygen, preferably air, having atmospheric pressure is used as a roasting gaseous atmosphere.

9. Method according to claim 1, characterised in that a temperature in the range of 20 °C to 30 °C, more particularly ambient temperature, is chosen as an initial temperature.

10. Method according to one of the claims 2 to 7, characterised in that a roasting temperature in the range of 70 °C to 400 °C and a preroasting time in the range of 10 minutes to 6 hours are chosen.

11. Method according to claim 10, characterised in that a roasting temperature in the range of 70 °C to 200 °C and a preroasting time in the range of 10 minutes to 2 hours are chosen.

12. Method according to claim 10, characterised in that a roasting temperature in the range of 200 °C to 400 °C and a preroasting time in the range of 10 minutes to 30 minutes are chosen.

13. Method according to claim 1, characterised in that the initial powder is produced as uranium oxide and/or uranium-plutonium oxide mixed-crystal having a powder temperature above the roasting temperature and is first cooled in an inert gaseous atmosphere, in that the initial powder is then preroasted after an upper limiting temperature is reached until a lower limiting temperature is reached in the oxidizing roasting gaseous atmosphere and is finally cooled in the cooling gaseous atmosphere to the initial temperature.

14. Method according to claim 13, characterised in that an upper limiting temperature in the range of 170 °C to 280 °C and a lower limiting temperature in the range of 120 °C to 150 °C are chosen.

15. Method according to claim 14, characterised in that 250 °C is chosen as an upper limiting temperature and 130 °C is chosen as a lower limiting temperature.

16. Method according to claim 13, characterised in that the initial powder when preroasting between the upper and the lower limiting temperature is cooled with an initial speed in the range of 10 °C/minute to 20 °C/minute and with a final speed of 0.1 °C/minute.

17. Method according to claim 13, characterised in that the initial powder is fluidized when preroasting in a reaction vessel in the roasting gaseous atmosphere and through heat transfer to a coolant, preferably to water in a double wall of the reaction vessel, is cooled from the upper to the lower limiting temperature.

18. Method according to claim 17, characterised in that the coolant having an initial temperature in the range of 20 °C to 30 °C, preferably having ambient temperature, is poured into the double wall of the reaction vessel.

19. Method according to claim 1, characterised in that nitrogen, a noble gas or a mixture of carbon dioxide or of nitrogen with oxygen, preferably air, having atmospheric pressure is used as a cooling gaseous atmosphere.

20. Method according to claim 1, characterised in that a noble gas, nitrogen and/or carbon dioxide with a pressure in the range of 1 to 1.5 bar is used as a heating gaseous atmosphere.

**Revendications**

1. Procédé de fabrication de corps frittés oxydés en matière combustible nucléaire par compression d'une poudre de départ à base d'oxyde d'uranium, d'un mélange de poudre de départ d'oxyde d'uranium et d'oxyde de plutonium ou de poudre de départ de cristaux mixtes d'oxyde d'uranium et de plutonium en comprimés et par un traitement thermique de ces comprimés, ayant en leur sein une phase cristalline de $U_4O_9$ ou de $(U,Pu)_4O_9$ dans une mesure détectable par cristallographie, en opérant à une température de frittage de 1 000 °C à 1 400 °C dans une atmosphère gazeuse oxydante, puis réductrice, caractérisé en ce qu'il consiste à précalciner la poudre de départ et/ou les comprimés à une température de calcination inférieure à la température de frittage, dans une atmosphère gazeuse oxydante de calcination, avec un potentiel d'oxygène pour lequel il se forme la phase cristalline $U_4O_9$ ou $(U,Pu)_4O_9$, et ensuite à refroidir les comprimés à une température initiale inférieure à la température de calcination dans une atmosphère gazeuse de refroidissement inerte ou oxydante tout en conservant la phase cristalline $U_4O_9$ ou $(U,Pu)_4O_9$ et, à porter les comprimés à partir de cette température initiale à la température de frittage dans une atmosphère gazeuse de chauffage inerte ou oxydante, tout en conservant la phase cristalline $U_4O_9$ ou $(U,Pu)_4O_9$.

2. Procédé suivant la revendication 1, caractérisé en ce qu'il consiste à précalciner la poudre de départ de manière à former au moins 20 % en poids de phase cristalline $U_4O_9$ ou $(U,Pu)_4O_9$.

3. Procédé suivant la revendication 2, caractérisé en ce qu'il consiste à précalciner la poudre de départ de façon à la transformer complètement en la phase cristalline $U_4O_9$ ou $(U,Pu)_4O_9$.

4. Procédé suivant la revendication 2, caractérisé en ce qu'il consiste à mélanger la poudre de départ précalcinée, après le refroidissement à la température initiale, à une quantité telle de poudre de départ à base d'oxyde d'uranium, à base d'oxyde de plutonium et/ou à base de cristaux mixtes d'oxyde d'uranium et de plutonium, pour obtenir un mélange de poudres ayant une teneur en phase cristalline $U_4O_9$ ou $(U,Pu)_4O_9$ d'au moins 20 %.

5. Procédé suivant la revendication 1, caractérisé en ce qu'il consiste à comprimer les comprimés en poudre de départ à base d'oxyde d'uranium, à base d'oxyde de plutonium et/ou à base de cristaux mixtes d'oxyde d'uranium et de plutonium et, ensuite, à les précalciner de manière à former au moins 20 % en poids d'une phase cristalline $U_4O_9$ ou $(U,Pu)_4O_9$.

6. Procédé suivant la revendication 5, caractérisé en ce qu'il consiste à précalciner les comprimés de manière à les transformer entièrement en la phase cristalline $U_4O_9$ ou $(U,Pu)_4O_9$.

7. Procédé suivant la revendication 1, caractérisé en ce qu'il consiste à précalciner la poudre de départ et/ou les comprimés dans l'atmosphère gazeuse oxydante de calcination avec un potentiel d'oxygène pour lequel il se forme, dans une mesure détectable par cristallographie, outre la phase cristalline $U_4O_9$ ou $(U,Pu)_4O_9$, une phase cristalline $U_3O_8$ ou $(U,Pu)_3O_8$.

8. Procédé suivant la revendication 1, caractérisé en ce qu'il consiste à utiliser, comme atmosphère gazeuse de calcination, un mélange de dioxyde de carbone ou d'azote et d'oxygène, de préférence d'air, sous la pression atmosphérique.

9. Procédé suivant la revendication 1, caractérisé en ce qu'il consiste à choisir, comme température initiale, une température de 20 °C à 30 °C et, notamment, la température ambiante.

10. Procédé suivant l'une des revendications 2 à 7, caractérisé en ce qu'il consiste à choisir la température de calcination entre 70 °C et 400 °C et la durée de décalcination entre 10 minutes et 6 heures.

11. Procédé suivant la revendication 10, caractérisé en ce qu'il consiste à choisir la température de calcination entre 70 °C et 200 °C et la durée de précalcination entre 10 minutes et 2 heures.

12. Procédé suivant la revendication 10, caractérisé en ce qu'il consiste à choisir la température de calcination entre 200 °C et 400 °C et la durée de précalcination entre 10 minutes et 30 minutes.

13. Procédé suivant la revendication 1, caractérisé en ce qu'il consiste à produire la poudre de départ sous la forme d'oxyde d'uranium et/ou de cristaux mixtes d'oxyde d'uranium et de plutonium à une température de la poudre qui est supérieure à la température de calcination et à la refroidir d'abord dans une atmosphère de gaz inerte, à précalciner ensuite la poudre de départ dès qu'elle atteint une température limite supérieure et jusqu'à ce qu'elle atteigne une température limite inférieure, dans l'atmosphère gazeuse oxydante de calcination, et enfin à la refroidir à la température initiale dans l'atmosphère gazeuse de refroidissement.

14. Procédé suivant la revendication 13, caractérisé en ce qu'il consiste à choisir la température limite supérieure entre 170 °C et 280 °C et la température limite inférieure entre 120 °C et 150 °C.

15. Procédé suivant la revendication 14, caractérisé en ce qu'il consiste à choisir comme température limite supérieure 250 °C et comme température limite inférieure 130 °C.

16. Procédé suivant la revendication 13, caractérisé en ce qu'il consiste à refroidir la poudre de départ lors de la précalcination entre la température limite supérieure et la température limite inférieure, à une vitesse initiale de l'ordre de 10 °C/minute à 20 °C/minute et à une vitesse finale de 0,1 °C/minute.

17. Procédé suivant la revendication 13, caractérisé en ce qu'il consiste à faire tourbillonner la poudre de départ, lors de la précalcination, dans un récipient de réaction dans l'atmosphère gazeuse de calcination et à la refroidir par transfert de chaleur à un agent de refroidissement, de préférence à de l'eau, dans la double paroi du récipient de réaction, de la température limite supérieure à la température limite inférieure.

18. Procédé suivant la revendication 17, caractérisé en ce qu'il consiste à emplir la double paroi du récipient de réaction d'agent de refroidissement ayant une température initiale de 20 °C à 30 °C et, de préférence, ayant la température ambiante.

19. Procédé suivant la revendication 1, caractérisé en ce qu'il consiste à utiliser, comme atmosphère gazeuse de refroidissement, de l'azote, un gaz rare ou un mélange de dioxyde de carbone ou d'azote et d'oxygène, de préférence de l'air, sous la pression atmosphérique.

20. Procédé suivant la revendication 1, caractérisé en ce qu'il consiste à utiliser, comme atmosphère gazeuse de chauffage, un gaz rare, de l'azote et/ou du dioxyde de carbone sous une pression de 1 à 1,5 bar.